# EUROPÄISCHE PATENTSCHRIFT

(11) **EP 2 314 449 B1**
(45) Veröffentlichungstag und Bekanntmachung des Hinweises auf die Patenterteilung: **07.08.2013**
(21) Anmeldenummer: 09173629.8
(22) Anmeldetag: 21.10.2009
(51) Int. Cl.: B32B 13/00

(54) **Werkstoffplatte umfassend eine beschichtete anorganische Trägerplatte**
Material board comprising a coated inorganic mounting plate
Plaque de matière brute comprenant une plaque de support anorganique revêtue

(43) Veröffentlichungstag der Anmeldung: 27.04.2011
(73) Patentinhaber: Falquon GmbH, 16928 Pritzwalk (DE)
(72) Erfinder:
(74) Vertreter: Morawski, Birgit

(56) Entgegenhaltungen:
- DE-U1-202004 002 677

## Beschreibung

Die Erfindung betrifft eine Werkstoffplatte nach dem Oberbegriff des Anspruchs 1 und ein Verfahren zu deren Herstellung nach Anspruch 11.

Der Einsatz von Holzwerkstoffplatten, insbesondere von als Fußbodenplatten in Laminatböden verwendeten Holzwerkstoffplatten beschränken sich bisher auf Wohnbereiche und weitere, wenig beanspruchte Objekte (DIN EN 685).

Die Verwendung von Laminatfußböden basierend auf Holzwerkstoffplatten für stark beanspruchte Objekte beziehungsweise Anwendungen, die sich im Grenzbereich zwischen Objekt- und Industrieanwendung befinden, wird derzeit jedoch nicht empfohlen. So endete die entsprechende DIN-Norm (DIN EN 13329: Laminatböden - Elemente mit einer Deckschicht auf Basis aminplastischer, wärmehärtbarer Harze - Spezifikationen, Anforderungen und Prüfverfahren) bisher bei der Beanspruchungsklasse 33, die für eine gewerblich starke Anwendung steht.

Aufgrund eines möglichen, großen Wachstumspotentials im Bereich von hoch beanspruchten Objekten, beispielsweise in Schulen oder Krankenhäuser, sowie der leichten industriellen Anwendung wurde zusätzlich die Beanspruchungsklasse 34 eingeführt. Der Schwerpunkt der Produkteigenschaften der neuen Klasse liegt insbesondere bei den noch weiter verbesserten mechanischen Eigenschaften, wie Abriebfestigkeit und Stoßfestigkeit. Daneben sind aber auch Anforderungen an den Bodenbelag im Hinblick auf seine Reinigungsfähigkeit mit industriellen Reinigungsgeräten in die genannte Klasse 34 aufgenommen.

Bisherige Ansätze zur Herstellung von Fußböden mit den Eigenschaften der Beanspruchungsklasse 34 umfassen eine mechanische Verstärkung der Laminatböden durch Einsatz von zusätzlichen Papierlagen oder das Aufbringen von Laminaten.

Dabei bleibt jedoch eine Vielzahl von weitergehenden Eigenschaften unverändert beziehungsweise sind im Vergleich zu einem Standardlaminatboden der Beanspruchungsklasse 33 nur geringfügig verbessert. Dies gilt insbesondere für die verwendete Trägerplatte, welche in ihrem Verhalten gegenüber Feuchtigkeit und Wasser als kritisch einzustufen ist. In besonderem Maße betrifft das den Fall der Anwendung in hochbeanspruchten Objekten, in denen die Bodenbeläge mit Industriereinigungsgeräten gesäubert werden und die Ansprüche insbesondere an die Entflammbarkeit erhöht sind. Des Weiteren sind die mechanischen Beanspruchungen erhöht.

Es ist bekannt, Holzfaserplatten mit Zement zu versehen (WO 03/016626 A2, US 5,188,889). Die so hergestellten Werkstoffplatten verfügen jedoch über eine nur geringe Stabilität, so dass zusätzlich verstärkende Oberflächenschichten aufgetragen werden müssen.

Des Weiteren werden in der DE 10 2005 023 661 A1 Laminatfußböden mit einer integrierten Dämpfungszwischenschicht erwähnt, wobei das Laminat neben der genannten Dämpfungszwischenschicht eine obere abriebfeste Schicht und einen tragenden Kern umfasst. Der tragende Kern kann dabei eine Spanplatte, eine Faserzementplatte oder eine Platte auf Polymerbasis umfassen. Die Dämpfungszwischenschicht besteht aus einem elastischen Material wie Gummi oder thermoplastische Materialien.

Aus der DE 20 2004 002 677 U1 ist die Verwendung von mit einem Haftvermittler umhüllten abriebfesten Partikeln, die zur Herstellung von Dekorpapier mit abriebfester Oberfläche verwendet werden, bekannt. Das mit einer abriebfesten Schicht versehene Dekorpapier wird nun mit einer HDF-Basisplatte aus Holzfasern und einem Gegenzugspapier verpresst.

Aufgrund der verwendeten Materialien ist in den genannten Fällen jedoch die mechanische Beanspruchbarkeit, Entflammbarkeit und Wasserbeständigkeit nur bedingt gegeben.

Der vorliegende Erfindung liegt daher die Aufgabe zu Grunde, eine Werkstoffplatte zur Verfügung zu stellen, die in Hinblick auf mechanische Beanspruchbarkeit, Verhalten gegenüber Beanspruchung durch Wasser und Brandverhalten deutlich gegenüber den bisher bekannten Produkten, insbesondere in Bezug auf die Beanspruchungsklasse 34 der DIN EN 13329, verbessert ist.

Diese Aufgabe wird erfindungsgemäß durch eine Werkstoffplatte mit den Merkmalen des Anspruchs 1 gelöst.

Die erfindungsgemäße Werkstoffplatte umfasst demnach eine anorganische Trägerplatte mit mindestens einer Oberflächenschicht und mindestens einer Gegenzugsbeschichtung, wobei die Oberflächenschicht mindestens eine Lage umfassend natürliche oder synthetische Fasern, mindestens ein Bindemittel, abriebfeste Partikel und mindestens ein Additiv aufweist.

In einer Ausführungsform ist die mindestens eine Oberflächenschicht auf einer Seite der Trägerplatte, insbesondere der Oberseite der Trägerplatte angeordnet, und die mindestens eine Gegenzugsbeschichtung ist auf der gegenüberliegenden Seite der Trägerplatte, insbesondere der Unterseite der Trägerplatte angeordnet. Die Gegenzugsbeschichtung dient insbesondere der Stabilisierung der Trägerplatte zur Gewährleistung der Spannungssymmetrie und als zusätzliche Feuchtigkeitssperre.

Unter dem Begriff der "anorganischen Trägerplatte" werden im Sinne der vorliegenden Erfindung insbesondere solche Platten verstanden, die im Wesentlichen aus anorganischen Materialien wie Zement bestehen. Der Zusatz von organischen Füllmaterialien ist nicht ausgeschlossen, ist aber bezogen auf die Gesamtmenge als gering, z. B. weniger als 20 Gew% einzustufen. In einer bevorzugten Ausführungsform ist die anorganische Trägerplatte eine Zementfaserplatte, eine Zementspanplatte und/oder eine Gipsfaserplatte.

Die genannten anorganischen Trägerplatten weisen aufgrund ihrer spezifischen Zusammensetzung grundsätzlich andere Eigenschaften als die üblicherweise verwendeten Holzfaserplatten oder Holzspanplatten auf. So sind diese nicht brennbar (DIN 4102), unempfindlich gegenüber Wasser- und Feuchtigkeitseinflüssen und sind in der Regel gegenüber Pilz- und lnsektenbefall resistent. Des Weiteren sind anorganische Platten bezüglich ihres Tritt- und Raumschalles beim Begehen deutlich günstiger als Träger auf Basis von Holzfasern oder Holzspänen mit organischen Bindemitteln.

Zur Gruppe der Zementfaserplatten gehören typischerweise Kalziumsilikat-Platten und glasfaserbewehrte Leichtbetonplatten. Sie werden aus Zement, Faserarmierungszusätzen, mineralischen Füllstoffen, Quarz und möglichen weiteren Zusätzen hergestellt. Die Herstellung erfolgt aus porösen Kalksilikaten, die mit Zellstoff vermischt und unter überhitztem Wasserdampf und hohem Druck gehärtet werden. Dabei kommt es zur Ausbildung einer feinporigen, offenen Struktur, die ein hohes Wasseraufnahmevermögen und gute Wärmedämmeigenschaften aufweist. Eine typische Zementfaserplatte weist ca. 20 Gew% Fasern bzw. Späne, ca. 60 Gew% Zement und ca. 20 Gew% gebundenes Wasser auf. Glasfaserbewehrte Leichtbauplatten bestehen typischerweise aus Portlandzement, wobei die Glasfasern sich in der Deckschicht befinden.

Üblicherweise werden Zementfaserplatten als Außenwand- oder auch als Innenwandbekleidung verwendet.

Die quantitative Zusammensetzung des zur Herstellung der Oberflächenschicht aufgetragenen pulverförmigen Gemisches ist dabei wie folgt:
- Fasern: 30 bis 65 Gew%, bevorzugt 40 bis 60 Gew%,
- Bindemittel: 20 bis 45 Gew%, bevorzugt 30 bis 40 Gew%
- Abriebfeste Partikel: 5 bis 25 Gew%, bevorzugt 10 bis 20 Gew%, und
- Additiv: 0 bis 8 Gew%, bevorzugt 0,5 bis 6 Gew%.

Das mindestens eine Additiv ist bevorzugt aus der Gruppe enthaltend Pigmentfarbstoffe, leitfähige Substanzen, Flammschutzmittel, luminiszierende Stoffe und Metalle ausgewählt. Die verwendeten Additive können der Werkstoffplatten neuartige Eigenschaften verleihen und somit bei Verwendung der Werkstoffplatten als Fußboden- oder Wandpaneele zur Veränderung der physikalischen Eigenschaften z. B. des Laminatbodens beitragen.

Die Dicke der gesamten Oberflächenschicht kann zwischen 0,05 und 10 mm, insbesondere zwischen 0,2 und 5 mm liegen.

In einer bevorzugten Ausführungsform umfasst die Oberflächenschicht mindestens eine obere Lage und eine untere Lage. Die obere Lage weist dabei bevorzugt eine Dicke zwischen 0,05 und 7 mm auf, wohingegen die untere Lage eine bevorzugte Dicke zwischen 0,5 und 3 mm hat.

Die natürlichen oder synthetischen Fasern sind vorteilhafterweise aus der Gruppe enthaltend Holzfasern, Zellulosefasern, Wollfasern, Hanffasern und organische oder anorganische Polymerfasern ausgewählt, wobei Zellulosefasern besonders bevorzugt sind.

Das zum Einsatz kommende Bindemittel ist vorteilhafterweise ausgewählt aus der Gruppe enthaltend Melaminharze, Acrylatharze und Polyurethanharze, wobei sich Melaminharz als besonders geeignet erwiesen haben.

Die abriebfesten Partikel sind bevorzugt ausgewählt aus der Gruppe enthaltend Aluminiumoxide, Korund, Borcarbide, Siliziumdioxide, Siliziumcarbide und Glaskugeln, wobei Aluminiumoxid-Partikel besonders bevorzugt sind.

Neben der anorganischen Trägerplatte und der Oberflächenschicht und der Gegenzugbeschichtung kann die Werkstoffplatte zusätzlich mindestens eine Dekorlage und/oder mindestens eine schalldämmende Schicht umfassen. Die zusätzlichen Schichten können zwischen der Trägerplatte und der Oberflächenschicht oder auf der Unterseite der Trägerplatte angeordnet sein.

Die bevorzugt auf der Unterseite der Trägerplatte, d.h. der Seite mit der Oberflächenschicht gegenüberliegende Seite, angeordnete Gegenzugsbeschichtung ist bevorzugt ausgewählt aus einer Gruppe enthaltend Glasfasergewebe, Glasfaservliese oder Kraftpapier.

Es ist insbesondere bevorzugt, dass die als Gegenzugsbeschichtung verwendeten Komponenten bzw. Gewebe mit einem Kunstharz imprägniert verwendet werden. Das zum Einsatz kommende Kunstharz ist insbesondere ausgewählt aus der Gruppe enthaltend Melaminformaldehydharz, Harnstoffformaldehydharz, Phenolformaldehydharz oder Kombinationen davon.

Es ist ebenfalls möglich, eines der genannten Kunstharze oder eine Kombination der genannten Kunstharze ohne einen Träger wie Papier oder Gewebe direkt als Gegenzugsbeschichtung zu verwenden. Hierzu wird ein flüssiges Harz, insbesondere ein angedicktes Harz, ein- oder mehrmals auf die Unterseite der Trägerplatte aufgetragen und getrocknet, d.h. vorkondensiert. Anschließend wird die so behandelte anorganische Trägerplatte gedreht und die Oberseite der Trägerplatte mit dem pulverförmigen Gemisch zur Herstellung der Oberflächenschicht behandelt und verpresst. Es ist dabei von Vorteil, wenn die Menge des als Gegenzug aufgetragenen Kunstharzes mindestens der Menge des auf der Oberseite zur Herstellung der Oberflächenschicht aufgetragenen Gemisches entspricht.

Es ist ebenfalls denkbar, dass die Gegenzugsbeschichtung aus einer Mischung besteht, die der Zusammensetzung der Oberflächenschicht entspricht, d.h. der Gegenzug umfasst demnach bevorzugt natürliche oder synthetische Fasern, mindestens ein Bindemittel, abriebfeste Partikel und mindestens ein weiteres Additiv, wie z.B. Pigmentfarbstoffe, leitfähige Substanzen, Flammschutzmittel, luminiszierende Stoffe und Metalle. Die für den Gegenzug aufgetragenen Komponentenmengen entsprechen dabei ebenfalls bevorzugt den für die Oberflächenschicht aufgetragenen Komponentenmengen. Zur Herstellung des Gegenzuges unter Verwendung des genannten Gemisches kann das pulverförmige Gemisch zunächst auf eine Unterlage aufgebracht werden. Anschließend wird der Rest des Aufbaues, insbesondere eine anorganische Trägerplatte, aufgelegt bzw. die Zementfasern aufgestreut und folgend verpresst.

Die vorliegende Erfindung wird auch durch ein Verfahren mit den Merkmalen des Anspruchs 11 gelöst.

Demnach erfolgt die Herstellung einer Werkstoffplatte in einem Verfahren umfassend die folgenden Schritte:
a) Auftragen eines Gemisches umfassend natürliche oder synthetische Fasern, mindestens ein Bindemittel, abriebfeste Partikel, und mindestens ein Additiv auf mindestens eine Seite, insbesondere die Oberseite der anorganischen Trägerplatte, und
b) Verpressen des Gemisches auf der mindestens einen Seite der anorganischen Trägerplatte bei einem Druck zwischen 3 und 8 MPa und einer Temperatur oberhalb 180 °C unter Ausbildung der mindestens einen Oberflächenschicht auf der Trägerplatte

Das Gemisch in Schritt b) wird in einer Ausführungsform bei einer Temperatur zwischen 180 und 250 °C, bevorzugt zwischen 190 und 220 °C verpresst. Das Verpressen erfolgt bevorzugt in einer Kurztakt-(KT)-Presse. Durch das zum Verpressen verwendete Pressblech ist eine Anpassung und/oder Strukturierung der jeweiligen Oberflächenstruktur möglich.

Das Gemisch wird bevorzugt in Form eines Pulvers in einer Menge zwischen 100 bis 1000 g/m², bevorzugt zwischen 300 und 800 g/m², insbesondere bevorzugt zwischen 500 und 700 g/m² in einer oder mehreren Streustationen auf die anorganische Trägerplatte aufgetragen. Die Menge des aufgestreuten Pulvers kann jeweils in Abhängigkeit der späteren Beanspruchung variiert werden. So ergibt der Auftrag von 120 g Pulver/m² nach der Verpressung eine Oberflächenschicht mit einer Beschichtungsstärke von 0,1 mm. Auftragsmengen von 500 g Pulver/m² und darüber führen zur Bildung von beschichteten Zementfaserplatten, die die Erfordernisse der DIN EN 13329 der Klasse 34 erfüllen und übererfüllen.

Die Gegenzugbeschichtung kann entweder in einem weiteren, separaten Schritt c) auf die zweite Seite, bevorzugt die Unterseite der Trägerplatte, aufgebracht werden, oder parallel zusammen mit der mindestens einen Oberflächenschicht aufgetragen und verpresst werden.

Besteht der Gegenzug aus den gleichen Komponenten wie die Oberflächenschicht, so erfolgt der Auftrag des Gegenzuges in Form eines pulverförmigen Komponentengemisches in denselben Mengen wie im Falle der Oberflächenschicht.

Die Erfindung wird nachfolgend unter Bezugnahme auf die Figur der Zeichnung an einem Ausführungsbeispiel näher erläutert. Es zeigt:

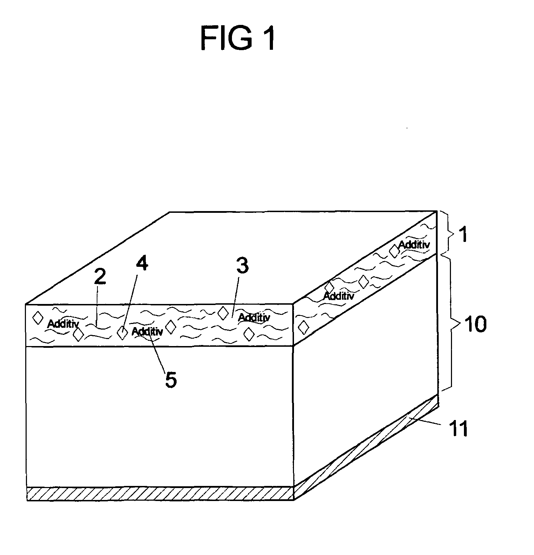

Figur 1 eine perspektivische Ansicht eines Querschnitts einer beschichteten Zementfaserplatte gemäß einer Ausführungsform.

Figur 1 zeigt den Querschnitt durch eine Werkstoffplatte bestehend aus einer anorganischen Trägerplatte 10 mit einer Oberflächenschicht 1 und einer Gegenzugsbeschichtung 11. Die Oberflächenschicht 1 enthält mindestens vier Komponenten: Zellulosefasern 2, ein Melaminharz als Bindemittel 3, Korund als abriebfeste Partikel 4 sowie ein Pigment als Additiv 5.

### Ausführungsbeispiel

Gemäß dem folgenden Beispiel wird eine Zementspanplatte als Trägerplatte mit einer Oberflächenschicht beschichtet.

Hierzu werden auf eine Zementspanplatte 600 g Pulver/m², bestehend aus Cellulosefasern, verschleißhemmenden Partikeln, Pigmenten und Melaminharzpulver aufgebracht. Dieser Aufbau wird zusammen mit einem Gegenzugimprägnat in einer Laborpresse bei einem Druck von 40 kp/ cm², bei einer Temperatur von 190 °C und einer Presszeit von 25 Sekunden verpresst.

Als Gegenzug wird im vorliegenden Falle Kraftpapier verwendet, mit einem Kunstharz imprägniert und parallel mit der Oberflächenschicht verpresst.

Anschließend wurden einige ausgewählte Prüfungen der oben genannten Norm durchgeführt. Die Ergebnisse stellen sich wie folgt dar:

| **Prüfung** | **Anforderungen nach DIN EN 13329 KI. 34** | **Ergebnis Versuchsaufbau** |
|---|---|---|
| Verhalten gegenüber Abriebbeanspruchung | 8500 Um | > 12000 Um |
| Verhalten gegenüber Stoßbeanspruchung ( KI. Kugel) | > 20 Newton | > 50 Newton |
| Verhalten gegenüber Stoßbeanspruchung ( Gr. Kugel) | > 1600 mm | > 2000 mm |

## Patentansprüche

1. Werkstoffplatte umfassend mindestens eine anorganische Trägerplatte (10),
**gekennzeichnet durch**
mindestens eine Oberflächenschicht (1) aus mindestens einer Lage (1), wobei die mindestens eine Lage (1) natürliche oder synthetische Fasern (2), mindestens ein Bindemittel (3), abriebfeste Partikel (4) und mindestens ein Additiv (5) umfasst, und mindestens eine Gegenzugsbeschichtung (11).

2. Werkstoffplatte nach Anspruch 1, **dadurch gekennzeichnet, dass** die anorganische Trägerplatte (10) eine Zementfaserplatte, eine Zementspanplatte und/oder eine Gipsfaserplatte ist.

3. Werkstoffplatte nach Anspruch 1 oder 2, **dadurch gekennzeichnet, dass** die Oberflächenschicht einen Anteil zwischen 0 bis 8 Gew %, bevorzugt zwischen 0,5 bis 6 Gew% des mindestens einen Additivs (5) aufweist.

4. Werkstoffplatte nach einem der vorhergehenden Ansprüche, **dadurch gekennzeichnet, dass** das mindestens eine Additiv (5) ausgewählt ist aus der Gruppe enthaltend Pigmentfarbstoffe, leitfähige Substanzen, Flammschutzmittel, luminiszierende Stoffe und Metalle.

5. Werkstoffplatte nach einem der vorhergehenden Ansprüche, **dadurch gekennzeichnet, dass** die natürlichen oder synthetischen Fasern ausgewählt sind aus der Gruppe enthaltend Holzfasern, Zellulosefasern, Wollfasern, Hanffasern und organische oder anorganische Polymerfasern.

6. Werkstoffplatte nach einem der vorhergehenden Ansprüche, **dadurch gekennzeichnet, dass** das Bindemittel ausgewählt ist aus der Gruppe enthaltend Melaminharze, Acrylatharze und Polyurethanharze.

7. Werkstoffplatte nach einem der vorhergehenden Ansprüche, **dadurch gekennzeichnet, dass** die abriebfesten Partikel ausgewählt sind aus der Gruppe enthaltend Aluminiumoxide, Korund, Borcarbide, Siliziumdioxide, Siliziumcarbide und Glaskugeln.

8. Werkstoffplatte nach einem der vorhergehenden Ansprüche, **dadurch gekennzeichnet, dass** die Werkstoffplatte zusätzlich mindestens eine Dekorlage und/oder mindestens eine schalldämmende Schicht umfasst.

9. Werkstoffplatte nach einem der vorhergehenden Ansprüche, **dadurch gekennzeichnet, dass** die Gegenzugsbeschichtung aus einer Gruppe enthaltend Kraftpapier, Bitumen oder einer Mischung enthaltend Holz, Papier und Kunstharz ausgewählt ist.

10. Werkstoffplatte nach Anspruch 9, **dadurch gekennzeichnet, dass** die Gegenzugsbeschichtung mit einem wärmehärtbaren Harz ausgewählt aus der Gruppe enthaltend Melaminformaldehydharz, Harnstoffformaldehydharz, Phenolformaldehydharz oder Kombinationen davon, imprägniert ist.

11. Verfahren zur Herstellung einer Werkstoffplatte nach einem der vorhergehenden Ansprüche umfassend die Schritte:
a) Auftragen eines Gemisches umfassend natürliche oder synthetische Fasern (2), mindestens ein Bindemittel (3), abriebfeste Partikel (4), und mindestens ein Additiv (5) auf mindestens eine Seite der anorganischen Trägerplatte (10), und
b) Verpressen des Gemisches auf der anorganischen Trägerplatte (1) bei einem Druck zwischen 3 und 8 MPa und einer Temperatur oberhalb 180 °C unter Ausbildung der Oberflächenschicht auf der Trägerplatte, und
c) ggf. Auftragen von mindestens einer Gegenzugsbeschichtung.

12. Verfahren nach Anspruch 11, **dadurch gekennzeichnet, dass** die Komponenten als Gemisch in einer Menge zwischen 100 bis 1000 g/m², bevorzugt zwischen 300 und 800 g/m², insbesondere bevorzugt zwischen 500 und 700 g/m² aufgetragen werden.

13. Verfahren nach Anspruch 11 oder 12, **dadurch gekennzeichnet, dass** das Gemisch in einer oder mehreren Streustationen aufgetragen wird.

14. Verfahren nach einem der Ansprüche 11 bis 13, **dadurch gekennzeichnet, dass** das Gemisch in Schritt b) bei einer Temperatur zwischen 180 und 250 °C, bevorzugt zwischen 190 und 220 °C verpresst wird.

## Claims

1. Material board comprising at least one inorganic base board (10),
**characterized by**
at least one surface layer (1) made up of at least one ply (1), the at least one ply (1) comprising natural or synthetic fibres (2), at least one binder (3), abrasion-resistant particles (4) and at least one additive (5), and at least one backing coating (11).

2. Material board according to Claim 1, **characterized in that** the inorganic base board (10) is a cement fibreboard, a cement-bound particleboard and/or a gypsum fibreboard.

3. Material board according to Claim 1 or 2, **characterized in that** the surface layer has a proportion of between 0 and 8% by weight, preferably between 0.5 and 6% by weight, of the at least one additive (5).

4. Material board according to one of the preceding claims, **characterized in that** the at least one additive (5) is selected from the group containing pigment dyes, conductive substances, flame retardants, luminescent substances and metals.

5. Material board according to one of the preceding claims, **characterized in that** the natural or synthetic fibres are selected from the group containing wood fibres, cellulose fibres, wool fibres, hemp fibres and organic or inorganic polymer fibres.

6. Material board according to one of the preceding claims, **characterized in that** the binder is selected from the group containing melamine resins, acrylate resins and polyurethane resins.

7. Material board according to one of the preceding claims, **characterized in that** the abrasion-resistant particles are selected from the group containing aluminium oxides, corundum, boron carbides, silicon dioxides, silicon carbides and glass beads.

8. Material board according to one of the preceding claims, **characterized in that** the material board additionally comprises at least one decorative ply and/or at least one sound insulation layer.

9. Material board according to one of the preceding claims, **characterized in that** the backing coating is selected from a group containing kraft paper, bitumen and a mixture comprising wood, paper and synthetic resin.

10. Material board according to Claim 9, **characterized in that** the backing coating is impregnated with a heat-curable resin selected from the group containing melamine-formaldehyde resin, ureaformaldehyde resin, phenol-formaldehyde resin or combinations thereof.

11. Process for producing a material board according to one of the preceding claims, comprising the following steps:
a) applying a mixture comprising natural or synthetic fibres (2), at least one binder (3), abrasion-resistant particles (4) and at least one additive (5) to at least one side of the inorganic base board (10), and
b) compressing the mixture on the inorganic base board (1) with a pressure of between 3 and 8 MPa and at a temperature of above 180°C forming the surface layer on the base board, and
c) if appropriate applying at least one backing coating.

12. Process according to Claim 11, **characterized in that** the components are applied as a mixture in a quantity of between 100 and 1000 g/m², preferably between 300 and 800 g/m², particularly preferably between 500 and 700 g/m².

13. Process according to Claim 11 or 12, **characterized in that** the mixture is applied in one or more scattering stations.

14. Process according to one of Claims 11 to 13, **characterized in that** the mixture is compressed in step b) at a temperature of between 180 and 250°C, preferably between 190 and 220°C.

## Revendications

1. Panneau de matériau comprenant au moins un panneau support inorganique (10),
**caractérisé par**
au moins une couche de surface (1), constituée d'au moins une couche (1), la ou les couches (1) comprenant des fibres naturelles ou synthétiques (2), au moins un liant (3), des particules résistantes à l'abrasion (4) et au moins un additif (5), et au moins un revêtement contre-traction (11).

2. Panneau de matériau selon la revendication 1, **caractérisé en ce que** le panneau support inorganique (10) est un panneau de fibres au ciment, un panneau de particules au ciment et/ou un panneau de fibres au gypse.

3. Panneau de matériau selon la revendication 1 ou 2, **caractérisé en ce que** la couche de surface présente une proportion comprise entre 0 et 8 % en poids, de préférence entre 0,5 et 6 % en poids, du ou des additifs (5).

4. Panneau de matériau selon l'une quelconque des revendications précédentes, **caractérisé en ce que** le ou les additifs (5) sont choisis dans le groupe contenant les colorants pigmentaires, les substances conductrices, les agents ignifuges, les substances luminescentes et les métaux.

5. Panneau de matériau selon l'une quelconque des revendications précédentes, **caractérisé en ce que** les fibres naturelles ou synthétiques sont choisies dans le groupe contenant les fibres de bois, les fibres de cellulose, les fibres de laine, les fibres de chanvre et les fibres polymères organiques ou inorganiques.

6. Panneau de matériau selon l'une quelconque des revendications précédentes, **caractérisé en ce que** le liant est choisi dans le groupe contenant les résines de mélamine, les résines d'acrylate et les résines de polyuréthane.

7. Panneau de matériau selon l'une quelconque des revendications précédentes, **caractérisé en ce que** les particules résistantes à l'abrasion sont choisies dans le groupe contenant les oxydes d'aluminium, le corindon, les carbures de bore, les dioxydes de silicium, les carbures de silicium et les billes de verre.

8. Panneau de matériau selon l'une quelconque des revendications précédentes, **caractérisé en ce que** le panneau de matériau comprend également au moins une couche décorative et/ou au moins une couche isolante.

9. Panneau de matériau selon l'une quelconque des revendications précédentes, **caractérisé en ce que** le revêtement contre-traction est choisi dans un groupe contenant le papier kraft, les bitumes ou un mélange contenant du bois, du papier et de la résine artificielle.

10. Panneau de matériau selon la revendication 9, **caractérisé en ce que** le revêtement contre-traction est imprégné avec une résine thermodurcissable choisie dans le groupe contenant la résine de mélamine-formaldéhyde, la résine d'urée-formaldéhyde, la résine de phénol-formaldéhyde ou leurs combinaisons.

11. Procédé de fabrication d'un panneau de matériau selon l'une quelconque des revendications précédentes, comprenant les étapes :
a) l'application d'un mélange comprenant des fibres naturelles ou synthétiques (2), au moins un liant (3), des particules résistantes à l'abrasion (4) et au moins un additif (5) sur au moins un côté du panneau support inorganique (10), et
b) la compression du mélange sur le panneau support inorganique (1) à une pression comprise entre 3 et 8 MPa et à une température supérieure à 180 °C avec formation de la couche de surface sur le panneau support, et
c) éventuellement l'application d'au moins un revêtement contre-traction.

12. Procédé selon la revendication 11, **caractérisé en ce que** les composants sont appliqués sous la forme d'un mélange en une quantité comprise entre 100 et 1 000 g/m², de préférence entre 300 et 800 g/m², de manière particulièrement préférée entre 500 et 700 g/m².

13. Procédé selon la revendication 11 ou 12, **caractérisé en ce que** le mélange est appliqué dans une ou plusieurs stations d'épandage.

14. Procédé selon l'une quelconque des revendications 11 à 13, **caractérisé en ce que** le mélange à l'étape b) est comprimé à une température comprise entre 180 et 250 °C, de préférence entre 190 et 220 °C.
